# EUROPEAN PATENT SPECIFICATION

(11) **EP 3 384 503 B1**
(45) Date of publication and mention of the grant of the patent: **21.04.2021**
(21) Application number: 16809161.9
(22) Date of filing: 30.11.2016
(51) Int. Cl.: H01B 1/04, H01B 7/28, H01B 7/18, B82Y 30/00, H01B 1/02, H01B 7/29, C01B 32/182

(54) **ELECTRICAL CABLES**
ELEKTROKABEL
CÂBLES ÉLECTRIQUES

(30) Priority: 01.12.2015 GB 201521160
(43) Date of publication of application: 10.10.2018
(73) Proprietor: Zytech Ltd, Colchester, Essex CO6 2JD (GB)
(72) Inventor: ZYMELKA, Antony, Colchester Essex CO6 2JD (GB)
(74) Representative: Cork, Robert
(86) International application number: PCT/GB2016/053756
(87) International publication number: WO 2017/093723

(56) References cited:
- EP-A1- 2 905 788
- CN-A- 101 807 453
- CN-U- 204 480 771
- CN-U- 204 577 148
- US-A1- 2007 237 469
- US-A1- 2013 140 058
- US-A1- 2015 200 031

## Description

The present invention relates a) to a method of forming a subsea power cable comprising a layer of a two dimensional material and b) to a subsea power cable formed with such a method.

Electrical cables are used to transfer electricity. These can range from large subsea power cables operating at high voltage (HV) and medium voltage (MV) together with distribution cables to small domestic cables. All of the power cables comprise a conductive core. It is advantageous for the conductivity of the cables to be enhanced as this prevents energy being lost to the environment. Additionally, copper, which is often used as the conductive core, is relatively expensive and it is therefore advantageous to limit the amount which has to be used.

Additionally, for larger cables, such as HV and MV distribution cables and subsea cables, the cable may comprise a sheath configured to provide a water barrier to protect the insulated core. The sheath is often made of material such as lead or a lead alloy and therefore significantly increases the mass of the cable. The sheath may also have a wire layer wound over it to assist in providing tensile strength to the cable as well as a physical armour. This armour wire layer is often composed of steel wires which may corrode and fail over time. It would therefore be advantageous to be able to provide lighter cables which were resistant to corrosion and have extended tensile abilities.

Telecommunication cables often comprise a conductive screen layer over the inner fibre optic package and high tensile steel wires providing the majority of the tensile strength of the cable, which includes the insulated core that carries the telecommunication signals. The conductive screen layer typically comprises copper. This screen provides electrical power but may corrode and fail over time. It would therefore be advantageous to be able to provide an electrical screen which is increased in tensile strength and is resistant to corrosion.

US2013/140058A discloses a graphene electrical wire and a method for manufacturing thereof. EP2905788A1 discloses a subsea power cable with conductors optimized with respect to conductivity, volume and weight such that the conductor will not yield under high laying tension in deep waters. CN204577148U discloses a high electrically conductive cable comprising a graphite alkene layer. CN204480771U discloses a flexible cable comprising an outer sheath layer made of graphene.

The present invention arises from the inventor's work in trying to overcome the problems associated with the prior art.

In accordance with a first aspect, there is provided a method of forming a subsea power cable according to claim 1. In accordance with a second aspect, there is provided a subsea power cable comprising a layer of a two dimensional material, hereinafter abbreviated to "2D material", according to claim 9.

The term "2D material" can refer to a material consisting of a single layer of atoms.

An atom within the single layer of atoms may be covalently bonded to one or more other atoms within the single layer of atoms. However, an atom within the single layer of atoms may not be covalently bonded to a further atom with is not in the single layer of atoms. Accordingly, the 2D material may comprise a plurality of layers. The plurality of layers may be adjacent to each other. The plurality of layers may not be connected by covalent bonds.

A material may be considered to be two dimensional if it has a thickness of less than 50 nm, 40 nm, 30 nm or 20 nm, more preferably less than 10 nm, 7.5 nm, 5 nm or 2.5 nm, and most preferably less than 2 nm, 1.5 nm or 1 nm.

Various 2D crystalline and other nano-materials have recently been developed that display some very interesting properties. For instance, graphene is 200 times stronger than steel. It is a good conductor and can act as a barrier to corrosion.

Advantageously, the layer of the 2D material increases the tensile strength of the cable and protects the cable from corrosion.

The 2D material may be selected from the group consisting of graphene; stanene; boron nitride; niobium diselenide; tantalum (IV) sulphide; and magnesium diboride. In one embodiment, the 2D material is stanene. The stanene may comprise many-layer stanene, few-layer stanene or single-layer stanene. In an alternative embodiment, the 2D material is graphene. The graphene may comprise many-layer graphene, few-layer graphene or single-layer graphene. Preferably, the graphene comprises single-layer graphene.

In one embodiment, the cable comprises a subsea power cable.

The electrical power cable may comprise a conductive core. The conductive core may comprise aluminium or copper. Preferably, the conductive core comprises copper.

Preferably, the layer of the 2D material is disposed on a surface of the conductive core.

In some embodiments, the electrical cable may comprise a plurality of conductive cores. Each of the plurality of conductive cores may comprise a surface with a layer of the 2D material disposed thereon.

Advantageously, the electrical conductivity of the or each conductive core is enhanced. Accordingly, the or each conductive core may comprise a smaller cross-section than would be necessary in a prior art cable. Since less material is required the cost and mass of the electric cable per unit length is reduced.

The electrical cable may comprise a direct current (DC) subsea power cable or an alternating current (AC) subsea power cable. The subsea power cable may comprise a subsea umbilical cable.

The electrical cable may comprise a single conductive core or a plurality of conductive cores. Preferably, the or each conductive core is disposed adjacent to and surrounded by a semi-conducting inner screen or conductor screen. Preferably, the or each conductive core is surrounded by an insulating layer. Preferably, the or each insulating layer is disposed adjacent to the or each semi-conducting inner screen. Preferably, the or each insulating layer comprises polymeric insulation or paper insulation. Preferably, the or each conductive core is surrounded by a semi-conducting outer screen, or insulation screen. Preferably, the or each semi-conducting outer screen is disposed adjacent to the or each insulating layer.

The electrical cable may comprise a sheath, wherein the sheath surrounds the conductive core and is configured to physically protect the conductive core. In embodiments for use in subsea environments, the sheath may be configured to prevent the flow of water therethrough. Accordingly, the sheath may comprise an impermeable metallic hermetic barrier. The sheath may also be referred to as 'armouring', and a cable comprising a sheath for mechanical protection maybe referred to as an armoured cable. In embodiments where the cable comprises a plurality of conductive cores one sheath may be configured to surround all of the plurality of cores. Alternatively or additionally, each of the plurality of cores may comprise a sheath. The sheath preferably comprises an impermeable metallic compound. The sheath may comprise a tape or foil. The sheath may comprise lead, a lead alloy, aluminium, an aluminium alloy, copper or a copper alloy.

The layer of the 2D material may be disposed on a surface of the sheath.

Advantageously, the layer of the 2D material increases the tensile strength of the sheath. Accordingly, the sheath may comprise less material than would be necessary in a prior art cable. Since less material is required the cost of the electrical cable and the mass of the electric cable per unit length is reduced. Alternatively, the sheath may comprise a similar amount of material to that used in the prior art but the cable would be able to withstand greater pressures.

The layer of the 2D material may be disposed on an internal surface of the sheath. However, in a preferred embodiment the layer of the 2D material is disposed on an external surface of the sheath. In a most preferred embodiment a layer of the 2D material is disposed on both the internal and external surfaces of the sheath.

Advantageously, the layer of the 2D material protects the sheath from corrosion.

In a preferred embodiment, the electrical cable comprises a conductive core with a first layer of the 2D material disposed on a surface thereof, and a sheath with a second layer of the 2D material disposed on a surface thereof.

The electrical cable may comprise an electrical shield or screen, wherein the electrical shield surrounds the conductive core and is configured to protect the conductive core from electrical interference. A cable comprising an electrical shield can be referred to as a shielded cable. The electrical shield acts as a Faraday cage, reducing the impact of external electrical interference on signals carried by the conductive core. The electrical shield can also reduce the strength of an external electromagnetic field generated by electrical currents carried by the conductive core, to reduce the impact of electromagnetic interference on nearby electrical equipment. In embodiments where the cable comprises a plurality of conductive cores each of the plurality of cores may comprise an electrical shield. The electrical shield may comprise metal wires and/or a metal foil. The metal wires or metal foil may comprise copper or aluminium.

The layer of the 2D material may be disposed on a surface of the electrical shield. In embodiments where the electrical shield comprises a metal foil the layer of the 2D material maybe disposed on an internal surface of the metal foil. Alternatively, the layer of the 2D material is preferably disposed on an external surface of the metal foil. In a most preferred embodiment, a layer of the 2D material is disposed on both the internal and external surfaces of the metal foil.

In embodiments where the electrical shield comprises metal wires each of the metal wires may comprise a layer of the 2D material.

Advantageously, the layer of the 2D material increases the tensile strength of the electrical shield and protects the electrical shield from corrosion.

In a preferred embodiment, the electrical cable comprises a conductive core with a first layer of the 2D material disposed on a surface thereof, and an electrical shield with a second layer of the 2D material disposed on a surface thereof.

In a most preferred embodiment, the electrical cable comprises a conductive core with a first layer of the 2D material disposed on a surface thereof, an electrical shield with a second layer of the 2D material disposed on a surface thereof, and a sheath with a third layer of the 2D material disposed on a surface thereof. Preferably, the sheath surrounds the conductive core and the electrical shield.

The electrical cable may comprise a layer of wires configured to prevent any defects from occurring in the structure. The layer of wires may comprise a layer of steel wires. The steel wires may be coated with bitumen.

The steel wires may comprise galvanised steel wires. However, in a preferred embodiment each of the wires may comprise a layer of the 2D material. For example, the layer of the 2D material may be disposed on the surface of the wire, or may be an internal layer included within the wire.

Advantageously, the layer of the 2D material increases the tensile strength of the wires. Accordingly, less material can be used to achieve the same level of protection and the mass per unit length of the cable is reduced. The layer of the 2D material also protects the steel wires from corrosion. Accordingly, it is not necessary to use galvanised steel wires.

In some embodiments of the invention, the two dimensional material may be configured to be superconducting or near-superconducting.
**Figure 1** (not part of the invention) is a schematic diagram of an electrical cable comprising a layer of two-dimensional material;
**Figure 2** is a schematic diagram of a direct current (DC) subsea power cable;
**Figure 3** is a cross-sectional view of an alternating current (AC) subsea power cable;

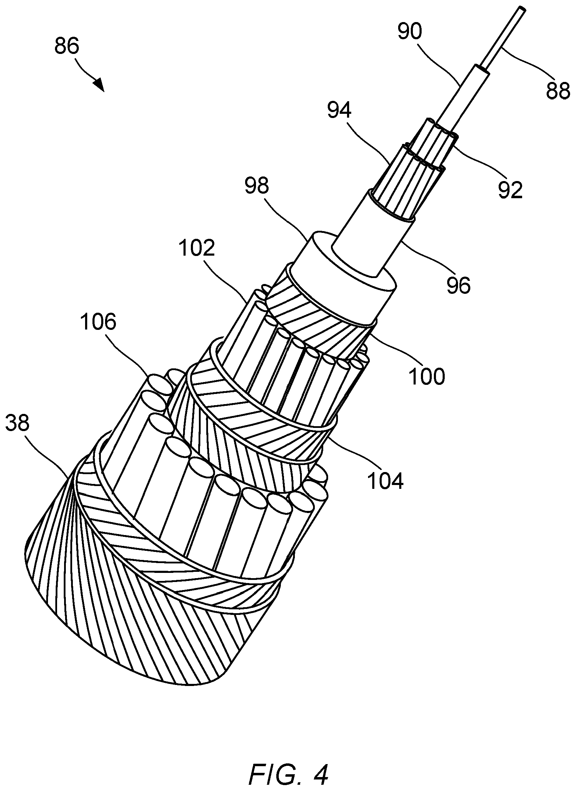

**Figure 4** (not part of the invention) is a subsea telecommunication cable; and

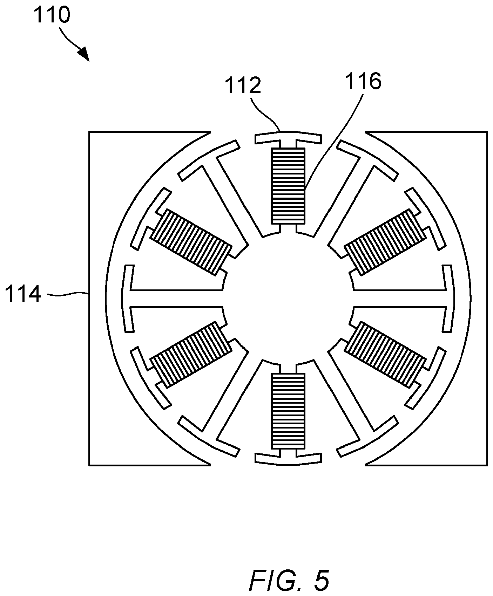

**Figure** 5 (not part of the invention) is a schematic diagram of apparatus for use as an electric motor or generator.

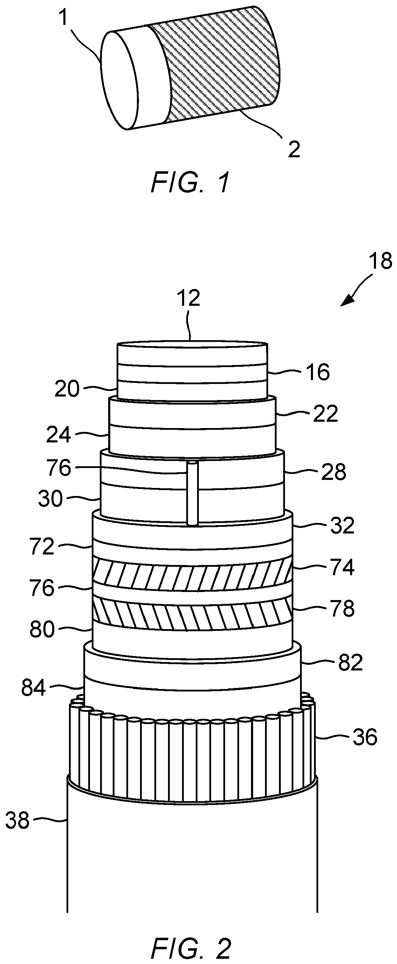

Figure 1 illustrates an electrical cable (not part of the invention). The cable comprises a conductive core 1 and a layer of two-dimensional material 2, for example a layer of graphene. The layer of two-dimensional material 2 can provide various benefits to the electrical cable, such as increased electrical conductivity, corrosion resistance and tensile strength. The electrical cable may be configured to operate at any voltage. In some embodiments, the electrical cable can be configured to operate at low voltage (LV), medium voltage (MV), high voltage (HV), extremely high voltage (EHV), or supertension voltages. In some embodiments, the electrical cable may comprise a distribution cable or domestic cable. Examples of specific embodiments of the invention will now be described in detail.

### Example 1: Subsea Power Cable

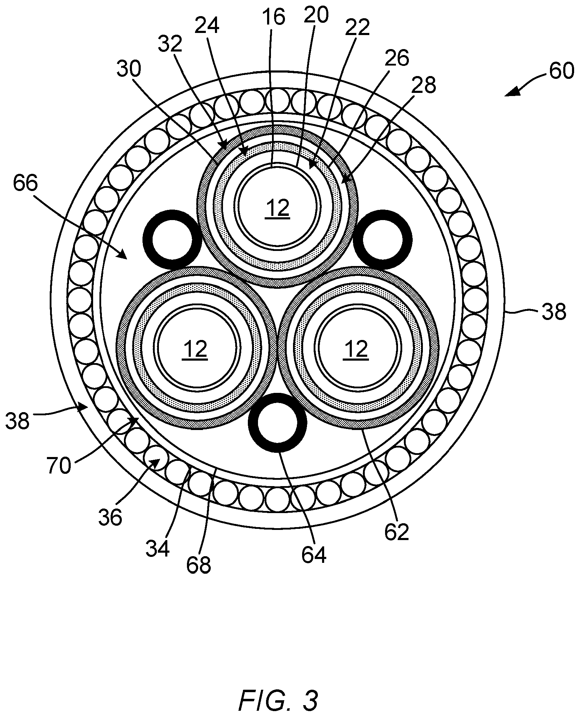

Figure 3 shows a dry alternating current (AC) subsea power cable 60. The subsea power cable 60 comprises three core elements 62, each of which comprises an inner copper core 12 with a layer of a 2D material 16 disposed thereon. Immediately adjacent to the layer of the 2D material 16 there is disposed an inner semiconducting layer 20, which would typically comprise a carbon-loaded polyethylene or ethylene copolymer (such as ethylene vinyl acetate (EVA) and ethylene butyl acrylate (EBA)), or blends thereof. Adjacent the inner semiconducting layer 20, there is disposed an insulating layer 22 which may comprise cross-linked polyethylene, ethylene propylene rubber (EPR) or paper. The semiconducting layer 20 provides a degree of insulation for the insulating layer 22 from the conductive core 12 and the insulating layer 22 provides an insulating electrical barrier between the core 12 and the rest of the cable 18.

Adjacent the insulating layer 22, there is disposed an outer semiconducting layer, or insulation screen, 24, as with the inner semiconducting layer 20, this would typically comprise a carbon-loaded polyethylene or ethylene copolymer (such as ethylene vinyl acetate (EVA) and ethylene butyl acrylate (EBA)), or blends thereof. The purpose of the outer semiconducting layer 24 is to control the electrical stress levels within the cable and maintain a defined electric field within the insulating layer 22 and at value below that which would cause electrical breakdown of the insulating layer 22. It also allows safe discharge of any charge build-up within the insulation layer 22 when the cable 18 is switched off.

Adjacent to the outer semiconducting layer 24 of each core element 62 there is disposed a water blocking tape layer 26. If the cable 18 were to be damaged creating a defect therein the water blocking tape layer 26 is intended to swell upon contact with water which penetrates the cable 18, thereby preventing any water penetrating to the outer semiconducting layer 24, insulating layer 22, inner semiconducting layer 20, layer of the 2D material 16 and conductive core 12. While the water blocking layer 26 in the illustrated embodiment comprises a water blocking tape it will be appreciated that it could instead comprise a powder or gel type compound. Additionally, while not illustrated in Figure 3, in some embodiments of the invention a water blocking layer can be included within the conductors to restrict water progress up the conductor strands. For example, a water blocking layer could be provided adjacent to the copper core 12 to restrict water progress up the core element 62.

Adjacent the water blocking tape layer 26, there is disposed an inner sheath 28 which would typically comprise lead, a lead alloy, aluminium, an aluminium alloy, copper or a copper alloy. The inner sheath 28 is provided to try and prevent any defects penetrating to the water blocking tape layer 26. The inner sheath 28 can act as an armouring layer to protect the internal components of the cable from mechanical damage. The inner sheath 28 may have been formed due to a solid extrusion or continuously welded for a "Dry cable". Alternatively, the inner sheath 28 may have been formed from a flat extrusion of foil or tape where the extrusion was then wrapped around the water blocking tape layer 26 and bonded for a "Semi dry cable". An additional layer of the 2D material 30 is disposed on the external surface of the inner sheath 28.

The additional layer of the 2D material 30 protects the inner sheath 28 from corrosion and significantly increases the tensile strength of the inner sheath 28. Accordingly, the cable 60 is stronger and could be used at greater depths. Alternatively, a thinner inner sheath 28 could be used to achieve the same strength resulting in a cable 60 which is cheaper to produce and has a reduced the mass per unit length.

In the illustrated embodiment the additional layer of the 2D material 30 is disposed on the outer surface of the inner sheath 28. However, it will be appreciated that a layer of the 2D material could be disposed on the inner surface of the inner sheath 28. This could be in addition to or instead of the layer of the 2D material 30 disposed on the outer surface of the inner sheath 28. The layer of the 2D material disposed on the inner surface of the inner sheath 28 would increase the tensile strength of the inner sheath 28 but would not protect the inner sheath 28 from corrosion.

Immediately adjacent the additional layer of the 2D material 30 there is disposed an outer sheath 32, which would typically comprise medium or high density polyethylene (MDPE or HDPE), polypropylene (PP) and/or poly(oxymethylene). The outer sheath 32 is provided to prevent the inner sheath 30 from being exposed to water and thereby further protects the inner sheath 30 from corrosion.

In addition to the three core elements 62 the subsea power cable 60 can comprise a number of optical fibre units 64. The core elements 62 and optical fibre units 64 are disposed in a filler package 66.

The filler package 66 comprising the core elements 62 and optical fibre units 64 is surrounded by a layer of binder tape 68. Adjacent the binder tape layer 68 is a layer of copper or brass tape 70. This layer is configured to protect the cable against boring marine organisms such the teredo, pholads and limnoria, and is often referred to as the anti-teredo layer 70. Adjacent to the anti-teredo layer 70 is disposed a bedding layer 34, and adjacent the bedding layer 34 there is disposed a layer of galvanised steel wires 36. As described above, each of the steel wires has a layer of graphene disposed on its surface. Since the outer layer of steel wires 36 in a subsea power cable are the main contributor of tensile strength to the cable, adding a layer of graphene or other two-dimensional material to the steel wires 36 as in the present embodiment can significantly increase the overall tensile strength of the cable. Finally, an external jacket layer 38 is provided which typically comprises a water permeable yarn cladding made of polypropylene. The external jacket layer 38 is provided to assist the bedding layer 34 in holding the layer of galvanised steel wires 36 in place.

While only a dry AC subsea power cable 60 is illustrated it will be appreciated that wet and semi-dry cables can also be used. A wet cable would be as described above but the cable elements 62 would not comprise a water blocking metallic tape layer 26, an inner sheath 28, an additional layer of the 2D material 30 or an outer sheath 32. Instead, the insulating layer 22 comprises a material configured to retard water tree growth therein.

Similarly, a semi-dry cable would be as described above but instead of comprising a water blocking layer 26, an inner sheath 28, an additional layer of the 2D material 30 or an outer sheath 32 each cable element 62 would comprise an overlapping tape or foil laminate layer adjacent to the outer semiconducting layer 24. The overlapping tape or foil laminate layer would be configured to provide an intermediate level of water blocking. A layer of 2D material could be provided on the overlapping tape or foil laminate layer to increase the tensile strength of this layer and protect it from corrosion.

Figure 2 shows a direct current (DC) subsea power cable 18. The subsea power cable 18 comprises a single inner copper core 12 with a layer of a two dimensional material 16 disposed thereon. Similar to the AC subsea power cable 60, the DC subsea power cable comprises an inner semiconducting layer 20, an insulating layer 22 and an outer semiconducting layer 24.

Adjacent to the outer semiconducting layer 24 there is disposed an inner sheath 28, with an additional layer of the two dimensional material 30 is disposed on the external surface of the inner sheath 28. Immediately adjacent the additional layer of the two dimensional material 30 there is disposed an outer sheath 32. A fibre optic cable unit 64 is disposed between the additional layer of the two dimensional material 30 and the outer sheath 32.

Adjacent the outer sheath 32 there is disposed a bedding layer 72,, and adjacent the bedding layer 72 there is disposed a first layer of copper wires 74 which are wound around the first bedding layer to form a helix. A layer of graphene is disposed on the surface of each of the copper wires. This increases the conductivity, tensile strength and corrosion resistance of the wires. Accordingly, less copper can be used than would be necessary in a prior art cable leading to a cost saving and reduced mass per unit length.

Adjacent the first layer of copper wires is a bedding layer 76 and a second layer of copper wires 78 which are wound around the bedding layer 76 in the opposite direction to the first layer of copper wires 74 to form a further helix. A layer of graphene is disposed on the surface of each of the copper wires as described above. The two layers of copper wires 74, 78 form an integrated return conductor and are configured to protect the core 12 from electrical interference. Alternatively, or additionally, a layer of copper foil could be used.

Adjacent to the second layer of copper wires 78 is a bedding layer 80 and then a further insulating layer 82 configured to electrically insulate the integrated return conductor. Adjacent the further insulating layer 82 is a bedding layer 84, which is adjacent to a layer of galvanised steel wires 36. As described above, each of the steel wires has a layer of graphene disposed on its surface. Since the outer layer of steel wires 36 in a subsea power cable are the main contributor of tensile strength to the cable, adding a layer of graphene or other two-dimensional material to the steel wires 36 as in the present embodiment can significantly increase the overall tensile strength of the cable. Finally, an external jacket layer 38 is provided.

In some embodiments of the present invention, a layer of 2D material in a subsea power cable may be configured to act as a superconductor in a certain temperature range. For example, a layer of graphene can be made superconducting or near-superconducting by coating with a layer of lithium or by doping the graphene layer with calcium atoms. By 'near-superconducting', it is meant that the 2D material exhibits an extremely low, but finite, electrical resistance. By using a superconducting or near-superconducting layer of 2D material, the copper core can be reduced in size or even omitted altogether, leading to a significant reduction in the physical size and mass per unit length of the subsea cable. Furthermore, the superconducting or near-superconducting 2D material can also avoid the voltage drop associated with conventional subsea cables. For example, the maximum length of an alternating current (AC) subsea power cable operating at 132 kilovolts (kV) is currently limited to roughly 80 kilometres (km), due to the voltage loss in the cable. By utilising a superconducting or near-superconducting layer of 2D material as described above, embodiments of the invention may enable a significant increase in AC system length, potentially to several thousands of km.

### Example 2: Manufacture

In all of the above examples, the layer of the 2D material can be grown directly onto the surface of the component on which it is to be used, or can be fabricated separately and subsequently attached or wrapped to the surface. For example, a layer of 2D material can be grown directly on the surface of a substrate using (vacuum) vapour deposition, centrifugal atomisation/deposition, or (electro) plating, or can be fabricated separately using a suitable method, for example mechanical exfoliation or sintering, and subsequently attached to the surface of the component by a continuous wrapping/taping process.

In some embodiments, the layer of 2D material may be formed on the surface of a nonconducting substrate, for example a polymer substrate. The substrate may comprise a thread, monofilament or sheet of material, thereby allowing the layer of 2D material formed on the surface of the substrate to be easily handled during the cable manufacturing process. For example, when a layer of 2D material is provided on the surface of a thread or monofilament, the layer of 2D material can be incorporated into the electrical cable using conventional cable manufacturing techniques, similar to the process by which the conducting cores or steel reinforcing wires are incorporated into a conventional cable.

### Conclusion

In conclusion, a layer of a 2D material, such as graphene, deposited onto a material increases the electrical conductivity thereof dramatically. It also increases the tensile strength of the material and protects the material from corrosion.

Accordingly, subsea power cables comprising a layer of a 2D material may be stronger, have a reduced mass per unit length and be cheaper to manufacture. These cables will also be more resistant to corrosion than prior art cables.

## Claims

1. A method of forming a subsea power cable comprising a layer of a two dimensional material, the method comprising:
forming a layer of two dimensional material by mechanical exfoliation, wherein the layer of two dimensional material is formed separately from a component of an electrical cable; and
subsequently incorporating the layer of two dimensional material onto a surface of the component of the subsea power cable comprising a conductive core, using a continuous wrapping or continuous taping process.

2. The method according to claim 1, wherein the component comprises a thread or monofilament, and
wherein the component is incorporated into the subsea power cable using a cable manufacturing process for incorporating wires into cables.

3. The method according to claim 1, wherein the component comprises the conductive core.

4. The method according to claim 1 or 3, wherein the component comprises a sheath which surrounds the conductive core and is configured to physically protect the conductive core.

5. The method according to claim 1, 3 or 4, wherein the component comprises an electrical shield or screen surrounding the conductive core and configured to protect the conductive core from electrical interference.

6. The method according to any one of the preceding claims, wherein the component comprises a layer of wires configured to prevent any defects from occurring in the structure.

7. The method according to any preceding claim, wherein the two dimensional material is selected from the group consisting of graphene; stanene; boron nitride; niobium diselenide; tantalum (IV) sulphide; and magnesium diboride.

8. The method according to any preceding claim, wherein the two dimensional material is a superconductor.

9. A subsea power cable formed using the method according to any preceding claim.

## Patentansprüche

1. Verfahren zum Formen eines Unterwasserstromkabels, umfassend eine Schicht aus einem zweidimensionalen Material, wobei das Verfahren Folgendes umfasst:
Formen einer Schicht aus zweidimensionalem Material durch mechanische Exfoliation, wobei die Schicht aus zweidimensionalem Material getrennt von einer Komponente eines Elektrokabels geformt wird; und
anschließendes Einbinden der Schicht aus zweidimensionalem Material auf einer Fläche der Komponente des Unterwasserstromkabels, umfassend einen leitfähigen Kern, unter Verwendung eines kontinuierlichen Wickel- oder kontinuierlichen Klebevorgangs.

2. Verfahren nach Anspruch 1, wobei die Komponente ein Gewinde oder Monofil umfasst, und
wobei die Komponente in das Unterwasserstromkabel unter Verwendung eines Kabelherstellungsvorgangs zum Einbinden von Drähten in Kabel eingebunden wird.

3. Verfahren nach Anspruch 1, wobei die Komponente den leitfähigen Kern umfasst.

4. Verfahren nach Anspruch 1 oder 3, wobei die Komponente einen Mantel umfasst, der den leitfähigen Kern umgibt und konfiguriert ist, um den leitfähigen Kern physisch zu schützen.

5. Verfahren nach Anspruch 1, 3 oder 4, wobei die Komponente eine(n) elektrische(n) Abschirmung oder Schirm umfasst, die bzw. der den leitfähigen Kern umgibt und konfiguriert ist, um den leitfähigen Kern vor elektrischen Störungen zu schützen.

6. Verfahren nach einem der vorhergehenden Ansprüche, wobei die Komponente eine Schicht aus Drähten umfasst, die konfiguriert ist, um zu verhindern, dass Defekte in der Struktur auftreten.

7. Verfahren nach einem der vorhergehenden Ansprüche, wobei das zweidimensionale Material aus der Gruppe ausgewählt ist, bestehend aus Graphen; Stanen; Bornitrid; Niobdiselenid; Tantal(IV)-sulfid; und Magnesiumdiborid.

8. Verfahren nach einem der vorhergehenden Ansprüche, wobei es sich bei dem zweidimensionalen Material um einen Supraleiter handelt.

9. Unterwasserstromkabel, das unter Verwendung des Verfahrens nach einem der vorhergehenden Ansprüche geformt wird.

## Revendications

1. Procédé de formation d'un câble d'alimentation sous-marin comprenant une couche d'un matériau bidimensionnel, le procédé comprenant :
la formation d'une couche de matériau bidimensionnel par exfoliation mécanique, dans lequel la couche de matériau bidimensionnel est formée séparément d'un composant d'un câble électrique ; et
l'incorporation ensuite de la couche de matériau bidimensionnel sur une surface du composant du câble d'alimentation sous-marin comprenant un noyau conducteur, à l'aide d'un processus d'emballage continu ou de rubanage continu.

2. Procédé selon la revendication 1, dans lequel le composant comprend un filetage ou un monofilament, et
dans lequel le composant est incorporé dans le câble d'alimentation sous-marin à l'aide d'un processus de fabrication de câble afin d'incorporer des fils dans des câbles.

3. Procédé selon la revendication 1, dans lequel le composant comprend le noyau conducteur.

4. Procédé selon la revendication 1 ou 3, dans lequel le composant comprend une gaine qui entoure le noyau conducteur et est configurée pour protéger physiquement le noyau conducteur.

5. Procédé selon la revendication 1, 3 ou 4, dans lequel le composant comprend un blindage ou un écran électrique entourant le noyau conducteur et configuré pour protéger le noyau conducteur des interférences électriques.

6. Procédé selon l'une quelconque des revendications précédentes, dans lequel le composant comprend une couche de fils configurés pour empêcher tout défaut de se produire dans la structure.

7. Procédé selon une quelconque revendication précédente, dans lequel le matériau bidimensionnel est choisi dans le groupe constitué de graphène ; de stanène ; de nitrure de bore ; de diséléniure de niobium ; de sulfure de tantale (IV) ; et de diborure de magnésium.

8. Procédé selon une quelconque revendication précédente, dans lequel le matériau bidimensionnel est un supraconducteur.

9. Câble d'alimentation sous-marin formé à l'aide du procédé selon une quelconque revendication précédente.
